# EUROPEAN PATENT APPLICATION

(11) **EP 4 808 117 A1**
(43) Date of publication of application: **16.09.2026**
(21) Application number: 25305340.9
(22) Date of filing: 13.03.2025
(51) Int. Cl.: H04N 19/105, H04N 19/119, H04N 19/176, H04N 19/52, H04N 19/593

(54) **SUB-BLOCK BASED SPATIAL BLOCK VECTOR DERIVATION**

(71) Applicant: InterDigital CE Patent Holdings, SAS, 75017 Paris (FR)
(72) Inventor: LE LEANNEC, Fabrice, 35830 BETTON (FR); NASER, Karam, 35250 MOUAZE (FR); BORDES, Philippe, 35890 LAILLE (FR); GALPIN, Franck, 35235 THORIGNE-FOUILLARD (FR)
(74) Representative: Vossius & Partner Patentanwälte Rechtsanwälte mbB

(57) **Abstract**

Systems, methods, and instrumentalities may be associated with sub-block based spatial block vector derivation. In examples, a device (e.g., a device for video decoding) may obtain a block vector (BV) associated with a first subblock of a video block. The video block may be adjacent to a current video block. The device may obtain a subblock merge candidate based on the BV. The device may generate a merge candidate list including the subblock merge candidate. The device may predict a subblock of the current video block based on the merge candidate list. The device may decode the current video block based on the predicted subblock.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities may be associated with sub-block based spatial block vector derivation. In examples, a device (e.g., a device for video encoding and/or decoding) may obtain a block vector (BV) associated with a first subblock of a video block. The video block may be adjacent to a current video block. The device may obtain a subblock merge candidate based on the BV. The device may generate a merge candidate list including the subblock merge candidate. The device may predict a subblock of the current video block based on the merge candidate list. The device may process (e.g., encode and/or decode) the current video block based on the predicted subblock.

The device may determine that an intra block copy (IBC) merge mode is enabled for the current video block. The device may determine a propagation direction associated with the BV. The device may obtain a plurality of subblocks of the current video block based on the propagation direction. The device may generate an IBC merge candidate list including the subblock merge candidate. The device may predict a subblock of the plurality of subblocks based on the IBC merge candidate list.

A subblock of the plurality of subblocks may be predicted using an IBC merge candidate list including the subblock merge candidate, and the subblocks of the current video block may include the subblock of the current video block.

The merge candidate list may be an IBC merge candidate list associated with the current video block or a merge candidate list that is separate from the IBC merge candidate list.

The device may obtain a motion vector (MV) associated with a second subblock of the video block that is adjacent to the current video block. The subblock merge candidate may be obtained further based on the MV associated with the second subblock of the video block.

The subblock merge candidate may be a subblock-based IBC merge candidate.

The subblock merge candidate may be a first BV merge candidate. The device may obtain a motion vector (MV) associated with a second subblock of the video block that is adjacent to the current video block. The device may obtain a MV merge candidate based on the MV associated with the second subblock of the video block. The merge candidate list may include the MV merge candidate and the first BV merge candidate.

The device may determine that a third subblock of the video block is predicted using an intra-prediction. The device may obtain a BV associated with the third subblock of the video block based at least on the BV associated with first subblock of the video block. The device may obtain a second BV merge candidate based on the BV associated with the third subblock. The merge candidate list may include the second BV merge candidate.

The device may obtain the BV associated with the third subblock of the video block using an interpolation process or a padding process.

The subblock merge candidate may be a BV merge candidate. The device may obtain a motion vector (MV) associated with a second subblock of the video block that is adjacent to the current video block. The device may obtain a MV merge candidate based on the MV associated with the second subblock of the video block. The merge candidate list may include the MV merge candidate and the BV merge candidate. The device may select the MV merge candidate from the merge candidate list based on a template cost associated with the MV merge candidate. The device may determine that advanced motion vector prediction (AMVP) is enabled for the current video block. The device may obtain a motion vector difference (MVD) associated with the current video block. The device may predict the subblock of the current video block based on the selected MV merge candidate and the MVD.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates as example of the reference region for intra block copy (IBC) mode.
FIG. 5 illustrates an example of padding candidates for the replacement of the zero-vector in the IBC list.
FIG. 6 illustrates an example of an extended reference region for IBC.
FIG. 7 illustrates example whole-block and sub-block-based motion representation categories.
FIG. 8 illustrates an example of control point based affine motion models.
FIG. 9 illustrates an example of affine motion field representation on a 4x4 subblock basis.
FIG. 10 illustrates an example of control point motion vector inheritance.
FIG. 11 illustrates an example of locations of inherited affine motion predictors.
FIG. 12 illustrates an example of locations of a candidate's position for constructed affine merge mode.
FIG. 13 shows a subblock motion vector (MV) vector sub block (VSB) and pixel ***Δv***(***i,j***)*.*
FIGS. 14A and 14B illustrate examples of sub-block based spatial motion vector prediction (sbSMVP) candidate types in which MVs of subblocks may be inherited directionally.
FIG. 15 illustrates an example for sub-block based spatial propagation of block vector information.
FIG. 16 shows an example CU decoding process, for example, for the case of a CU in IBC mode.
FIG. 17 shows an example of a mixed MV/BV spatial directional propagation to derive the prediction data of a current CU.
FIG. 18 shows an example of a mixed MV/BV spatial directional propagation used to derive the prediction data of a current CU.
FIG. 19 includes a position dependent MV difference assignment according to the angular direction used for spatial MV prediction.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

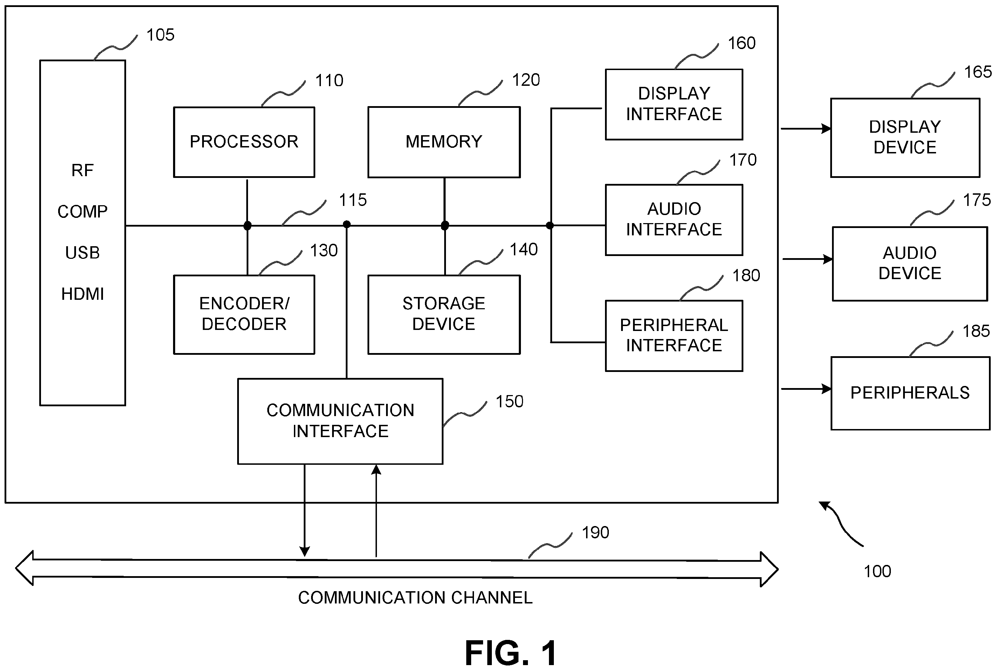

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

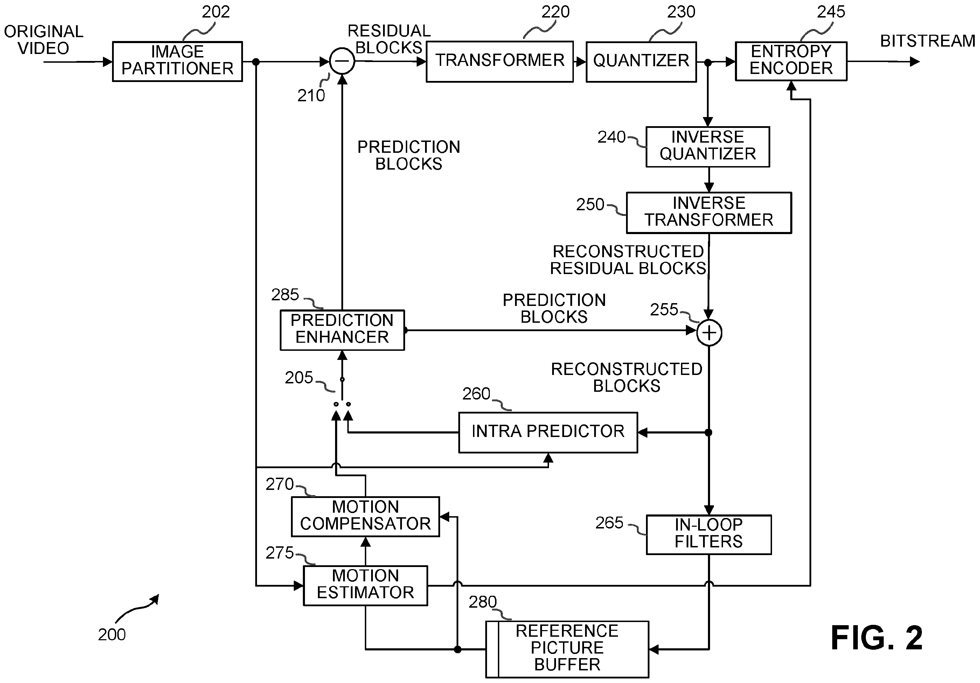

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

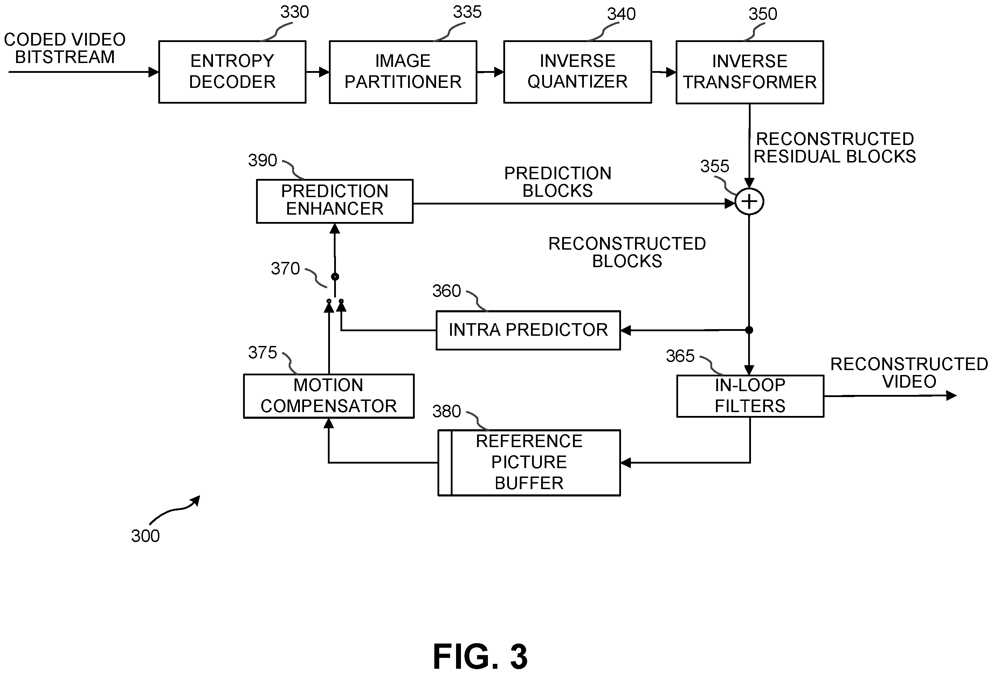

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and *V* (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities may be associated with sub-block based spatial block vector derivation. In examples, a device (e.g., a device for video encoding and/or decoding) may obtain a block vector (BV) associated with a first subblock of a video block. The video block may be adjacent to a current video block. The device may obtain a subblock merge candidate based on the BV. The device may generate a merge candidate list including the subblock merge candidate. The device may predict a subblock of the current video block based on the merge candidate list. The device may process (e.g., encode and/or decode) the current video block based on the predicted subblock.

The device may determine that an intra block copy (IBC) merge mode is enabled for the current video block. The device may determine a propagation direction associated with the BV. The device may obtain a plurality of subblocks of the current video block based on the propagation direction. The device may generate an IBC merge candidate list including the subblock merge candidate. The device may predict a subblock of the plurality of subblocks based on the IBC merge candidate list.

A subblock of the plurality of subblocks may be predicted using an IBC merge candidate list including the subblock merge candidate, and the subblocks of the current video block may include the subblock of the current video block.

The merge candidate list may be an IBC merge candidate list associated with the current video block or a merge candidate list that is separate from the IBC merge candidate list.

The device may obtain a motion vector (MV) associated with a second subblock of the video block that is adjacent to the current video block. The subblock merge candidate may be obtained further based on the MV associated with the second subblock of the video block.

The subblock merge candidate may be a subblock-based IBC merge candidate.

The subblock merge candidate may be a first BV merge candidate. The device may obtain a motion vector (MV) associated with a second subblock of the video block that is adjacent to the current video block. The device may obtain a MV merge candidate based on the MV associated with the second subblock of the video block. The merge candidate list may include the MV merge candidate and the first BV merge candidate.

The device may determine that a third subblock of the video block is predicted using an intra-prediction. The device may obtain a BV associated with the third subblock of the video block based at least on the BV associated with first subblock of the video block. The device may obtain a second BV merge candidate based on the BV associated with the third subblock. The merge candidate list may include the second BV merge candidate.

The device may obtain the BV associated with the third subblock of the video block through an interpolation process or a padding process.

The subblock merge candidate may be a BV merge candidate. The device may obtain a motion vector (MV) associated with a second subblock of the video block that is adjacent to the current video block. The device may obtain a MV merge candidate based on the MV associated with the second subblock of the video block. The merge candidate list may include the MV merge candidate and the BV merge candidate. The device may select the MV merge candidate from the merge candidate list based on a template cost associated with the MV merge candidate. The device may determine that advanced motion vector prediction (AMVP) is enabled for the current video block. The device may obtain a motion vector difference (MVD) associated with the current video block. The device may predict the subblock of the current video block based on the selected MV merge candidate and the MVD.

Intra block copy coding may be performed. Intra block copy (IBC) may be used for screen content coding. IBC may improve the coding efficiency of screen content materials. Block matching (BM) may be performed at the encoder to find an optimal block vector (or motion vector) for a (e.g., each) CU, for example, since IBC mode may be implemented as a block level coding mode. A block vector may indicate a displacement from the current block to a reference block, which may be reconstructed inside the current picture. The luma block vector of an IBC-coded CU may be in integer precision. The chroma block vector may round to integer precision. The IBC mode (e.g., if/when combined with AMVR) may switch between MV precisions (e.g., between 1-pel and 4-pel motion vector precisions). An IBC-coded CU may be treated as a third prediction mode, e.g., other than intra or inter prediction modes. The IBC mode may be applicable to CUs with width and/or height smaller than or equal to a threshold number of luma samples (e.g., 64 luma samples).

IBC mode may be signaled with an indication (e.g., a flag), e.g., at CU level. IBC mode may be signaled as IBC AMVP mode or IBC skip/merge mode.

IBC mode may be signaled as IBC skip/merge mode. A merge candidate index may be used to indicate which of the block vectors in the list from neighboring candidate IBC coded blocks is used to predict the current block. The merge list may include spatial, history-based motion vector predictor (HMVP), and/or pairwise candidates.

IBC mode may be signaled as IBC AMVP mode, also referred to as BVP mode herein. Block vector difference may be coded, for example, in the same way as a motion vector difference. The block vector prediction method may use one or more (e.g., two) candidates as predictors, for example, one from left neighbor and one from above neighbor (e.g., if IBC coded). A default block vector may be used as a predictor, for example, if/when one or more neighbors may not be available. A flag may be signaled to indicate the block vector predictor index.

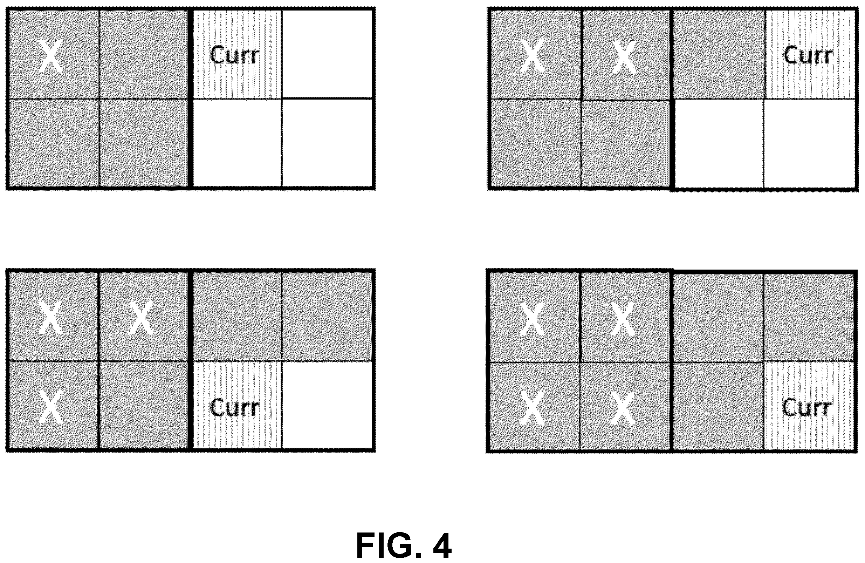

IBC may have a reference region. IBC may be implemented to limit memory consumption and/or decoder complexity. For example, IBC may allow (e.g., only) the reconstructed portion of the predefined area, e.g., including the region of the current coding tree unit (CTU) and/or some region of the left CTU. FIG. 4 illustrates as example of the reference region for IBC Mode. As shown in FIG. 4, a (e.g., each) block may represent a 64x64 luma sample unit.

FIG. 4 illustrates an example of current CTU processing order and available reference samples in the current and left CTU. One or more of the following may apply, for example, depending on the location of the current coding CU location within the current CTU.

A current block may refer to already reconstructed samples in the current CTU and may also refer to the reference samples in the bottom-right blocks (e.g., 64x64 blocks) of the left CTU (e.g., using IBC mode), for example, if the current block falls into the top-left block (e.g., 64x64 block) of the current CTU. The current block may (e.g., also) refer to the reference samples in the bottom-left block (e.g., 64x64 block) of the left CTU and the reference samples in the top-right block (e.g., 64x64 block) of the left CTU (e.g., using IBC mode).

A current block may refer to already reconstructed samples in the current CTU and may also refer to the reference samples in the bottom-left block (e.g., 64x64 block) and bottom-right block (e.g., 64x64 block) of the left CTU (e.g., using IBC mode), for example, if the current block falls into the top-right block (e.g., 64x64 block) of the current CTU and if luma location (0, 64) relative to the current CTU has not yet been reconstructed. A current block may refer to already reconstructed samples in the current CTU and may also refer to reference samples in bottom-right block (e.g., 64x64 block) of the left CTU, for example, if the current block falls into the top-right block (e.g., 64x64 block) of the current CTU and if luma location (0, 64) relative to the current CTU has been reconstructed.

A current block may refer to the already reconstructed samples in the current CTU and may also refer to the reference samples in the top-right block (e.g., 64x64 block) and bottom-right block (e.g., 64x64 block) of the left CTU (e.g., using IBC mode), , for example, if the current block falls into the bottom-left block (e.g., 64x64 block) of the current CTU and if luma location (64, 0) relative to the current CTU has not yet been reconstructed. A current block may refer to the already reconstructed samples in the current CTU and may also refer to the reference samples in the bottom-right 64x64 block of the left CTU (e.g., using IBC mode), for example, if the current block falls into the bottom-left block (e.g., 64x64 block) of the current CTU and if luma location (64, 0) relative to the current CTU has been reconstructed.

A current block may (e.g., only) refer to the already reconstructed samples in the current CTU (e.g., using IBC mode), for example, if the current block falls into the bottom-right block (e.g., 64x64 block) of the current CTU.

The foregoing restriction(s) may allow the IBC mode to be implemented using local on-chip memory for hardware implementations.

An IBC merge/AMVP list may be constructed. An IBC merge/AMVP list construction may be performed. An IBC merge/AMVP candidate may be inserted into the IBC merge/AMVP candidate list, for example, (e.g., only) if the IBC merge/AMVP candidate is valid. Above-right, bottom-left, and/or above-left spatial candidates and/or a (e.g., one) pairwise average candidate may be added into the IBC merge/AMVP candidate list. Template based adaptive reordering (ARMC-TM) may be applied to an IBC merge list.

An HMVP table size for IBC may be, for example, 25 entries. IBC merge candidates (e.g., up to 20 IBC merge candidates) may be derived with full pruning. IBC merge candidates may be reordered together, e.g., after derivation with full pruning. A set of first candidates (e.g., the first 6 candidates with the lowest template matching costs) may be selected as the final candidates in the IBC merge list, e.g., after reordering.

The zero vectors' candidates to pad the IBC Merge/AMVP list may be replaced with a set of BVP candidates located in the IBC reference region. A zero vector may be invalid as a block vector in IBC merge mode. Zero vectors may be discarded as BVP in the IBC candidate list.

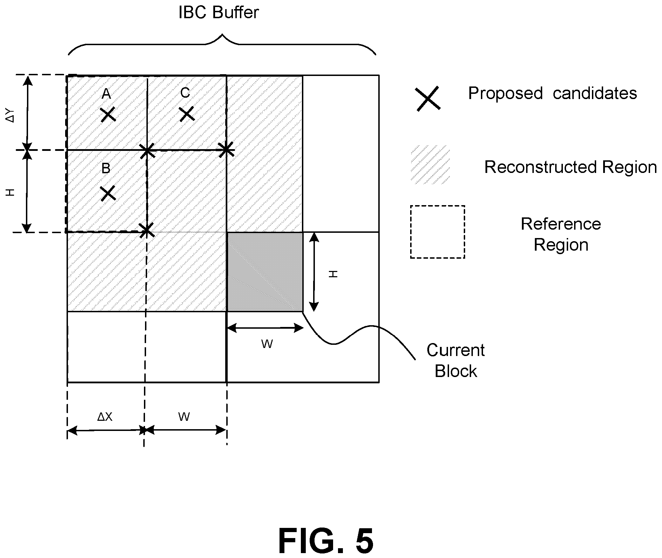

FIG. 5 illustrates an example of padding candidates for the replacement of the zero-vector in the IBC list. Three candidates may be located on the nearest corners of the reference region. Three additional candidates may be determined in the middle of the three sub-regions (A, B, and C). Candidate coordinates may be determined by the width and height of the current block and the ΔX and ΔY parameters, e.g., as depicted by example in FIG. 5.

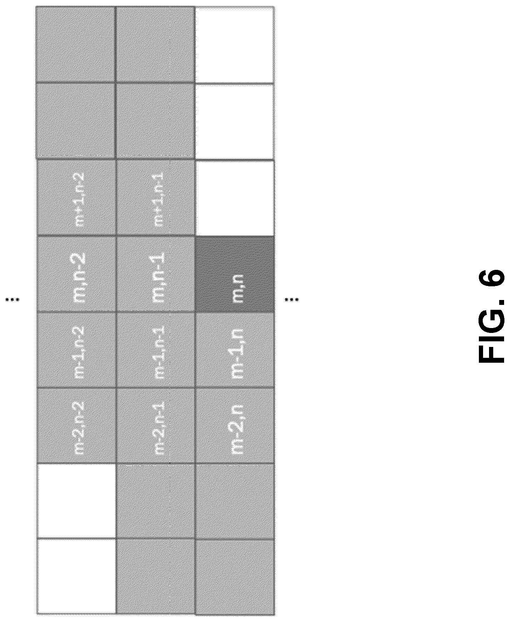

FIG. 6 illustrates an example of an extended reference region for IBC. IBC may have a reference region. The reference region for IBC may extend to two CTU rows above the CTU being processed by the encoder or the encoder. FIG. 6 illustrates an example of the reference area for coding CTU (m,n). CTU (m,n) may be coded based on a reference area that includes CTUs with index (m-2,n-2)...(W,n-2),(0,n-1)...(W,n-1),(0,n)...(m,n). W may denote the maximum horizontal index within the current tile, slice or picture. The per-sample block vector search (or called local search) range may be limited to [-(C << 1), C >> 2] horizontally and [-C, C >> 2] vertically to adapt to the reference area extension. C may denote the CTU size.

IBC may be implemented with template matching. Template matching (TM) based motion search and refinement may be applied to the case of IBC.

An IBC-template matching (IBC-TM) merge mode may be used. An IBC-TM merge mode may involve a merge candidate list for Block Vector (BV) prediction, which may be different from the merge candidate list used by (e.g., regular) IBC merge mode. The candidates may be selected according to a pruning method with a motion distance between the candidates, e.g., as in the (e.g., regular) TM merge mode. The zero motion candidates may be replaced, for example, by (-W, 0), (0, -H), (-W, -H) MVs.

The selected candidates in the IBC-TM merge mode may be refined, for example, with a template matching method. The TM-merge flag may be signaled to indicate the template matching merge IBC mode.

Candidates (e.g., up to three (3) candidates) in the IBC-TM AMVP mode may be selected from the IBC-TM merge list. A (e.g., each) candidate may be refined, for example, according to the (e.g., usual) template matching method. Refined candidates may be sorted, for example, according to their resulting TM cost.

TM refinement may be performed at integer pel position, for example, if/when used for IBC. TM refinement may be performed at integer or 4-pel precision (e.g., depending on the AMVR value), for example, if/when used for IBC-TM AMVP mode. The refinement may be performed within the existing IBC reference area.

IBC mode may interact with other coding tools, such as pairwise merge candidate, history-based motion vector predictor (HMVP), combined intra/inter prediction mode (CIIP), merge mode with motion vector difference (MMVD), and geometric partitioning mode (GPM). For example, IBC may be used with pairwise merge candidate and HMVP. A new pairwise IBC merge candidate may be generated, for example, by averaging (e.g., two) IBC merge candidates. IBC motion may be inserted into a history buffer for future referencing, e.g., for HMVP. In some examples, IBC may not be used in combination with an affine motion inter tool. IBC may be used in combination with combined inter-intra prediction (CIIP), MMVD, and/or geometric partitioning mode (GPM). In some examples, IBC may not be allowed for chroma coding blocks, e.g., if/when a DUAL_TREE partition is used.

The current picture may not be included as a reference picture in the reference picture list 0 for IBC prediction, for example. The derivation process of motion vectors for IBC mode may exclude (e.g., all) neighboring blocks in inter mode and vice versa.

The following IBC functionality may be applied. IBC may share the (e.g., same) process as in (e.g., regular) MV merge, including with pairwise merge candidate and history-based motion predictor, but may disallow temporal motion vector prediction (TMVP) and zero vector, e.g., because they are invalid for IBC mode. A separate HMVP buffer (e.g., five (5) candidates each) may be used for (e.g., conventional) MV and IBC. Block vector constraints may be implemented, e.g., in the form of a bitstream conformance constraint, the encoder may use to ensure that invalid vectors are not present in the bit-stream. Merge mode may not be used, for example, if the merge candidate is invalid (e.g., out of range or zero (0)). A bitstream conformance constraint may be expressed, for example, in terms of a virtual buffer (e.g., as described herein). IBC may be handled as inter mode, for example, for deblocking. AMVR may not use quarter-pel, for example, if the current block is coded using IBC prediction mode. AMVR may be signaled (e.g., only) to indicate whether MV is inter-pel or 4 integer-pel, for example, if the current block is coded using IBC prediction mode. The number of IBC merge candidates may be signaled in the slice header, for example, separately from the numbers of regular, subblock, and/or geometric merge candidates.

IBC merge mode with block vector differences (IBC-MBVD) may be implemented. Merge with motion vector difference (MMVD) may be used in inter-predicted blocks. Affine-MMVD and GPM-MMVD may be deployed, for example, as an extension of (e.g., regular) MMVD mode. MMVD mode has been extended to the IBC merge mode.

IBC-MBVD may be implemented with a motion vector difference distance set, for example, {1-pel, 2-pel, 4-pel, 8-pel, 12-pel, 16-pel, 24-pel, 32-pel, 40-pel, 48-pel, 56-pel, 64-pel, 72-pel, 80-pel, 88-pel, 96-pel, 104-pel, 112-pel, 120-pel, 128-pel}. The BVD directions may be two horizontal and two vertical directions.

The base candidates may be selected from a set of candidates (e.g., the first five candidates) in the reordered IBC merge list. The possible (e.g., all the possible) MBVD refinement positions (e.g., 20×4) for a (e.g., each) base candidate may be reordered, for example, based on the sum of absolute differences (SAD) cost between the template (e.g., one row above and one column left to the current block) and its reference for a (e.g., each) refinement position. The top (e.g., eight (8)) refinement positions with the lowest template SAD costs may be kept as available positions, e.g., for MBVD index coding. The MBVD index may be binarized by the rice code, e.g., with the parameter equal to one (1).

IBC may be adapted to camera-captured video content. The IBC coding mode may be used (e.g., by default) for the coding of camera-captured content. One or more adaptations may be used to make the IBC coding mode perform well, e.g., in terms of compression efficiency, such as high-level tool control, encoder optimization, fraction-pel extension on IBC.

High level tool control may be used to improve IBC coding mode performance. IBC merge modes may be disabled for natural content. A sequence parameter set (SPS) level flag may be implemented to disable the associated CU level signaling. IBC AMVP modes (e.g., only IBC AMVP modes) may be activated, for example, when indicated (e.g., explicitly indicated) by the SPS flag. RR-IBC, TM-IBC, and/or IBC-CIIP may be disabled for natural content. SPS flags corresponding to RR-IBC and TM-IBC may be implemented. IBC may be applied to intra slices for natural content, which may be indicated by high-level syntax to remove CU level signaling of IBC flag. IBC may be applied to slices for screen contents.

IBC block vector search may be optimized (e.g., at the encoder) for natural content. The rate distortion optimization (RDO) process may be skipped for an IBC AMVP mode, for example, if the SAD cost for the RDO process is (e.g., much) worse than the lowest SAD cost of (e.g., all) Intra modes. IBC AMVP modes may not be evaluated, for example, if/when the (e.g., best) Intra mode has less than a threshold number of nonzero coefficients (e.g., three (3) nonzero coefficients). Partitioning depth in an inter slice may be skipped, for example, depending on the picture order count (POC) distance between the current picture and its nearest reference picture. The POC distance may be set equal to zero (0), for example, if/when IBC is enabled from SPS level. The POC distance set equal to zero (0) may not align with the configuration used in common test conditions (CTC) for random access and low delay. In this test, for inter slices, the true POC distance may be used, e.g., instead of setting to zero (0).

Fraction-pel extension on IBC may be used to improve IBC coding mode performance. The representation of IBC block vectors may be extended to fractional-pel resolution. An interpolation filter may be used to derive the prediction samples located at a non-integer phase in the reconstructed area of the current frame. The option of block vector resolutions may include quarter-pel resolution, e.g., in additional to full-pel and 4-pel resolution. The first bin of AMVR syntax may be signaled (e.g., similar to inter AMVR syntax), for example, to indicate whether BV is in quarter-pel resolution. The second bin may be signaled, for example, to switch between full-pel and 4-pel resolutions. The interpolation filters applied to the luma and chroma components of IBC blocks may be, for example, the 8-tap luma filter and the same chroma filter as used in motion compensation, respectively, with possible exceptions. For example, a 2-tap bilinear interpolation filter may be applied to generating template prediction blocks, for example, if/when needed in IBC-related coding tools. Reference sample padding may be used, for example, if/when some of them are not available or located outside the valid IBC reference area in the current frame. Reference sample padding, e.g., if/when needed, may be performed in the horizontal direction (e.g., first) and then in the vertical direction.

Bi-predictive IBC may be implemented. A Bi-predictive IBC prediction mode may include methods with types of bi-predictive IBCs. For example, a first method (Method 1) may include an IBC BVP-merge mode. A second method (Method 2) may include a Bi-predictive IBC merge mode.

Method 1 may derive the two (e.g., required) BVs from IBC block vector prediction (BVP) mode (also referred to as IBC AMVP herein) and IBC merge mode (e.g., similar to the MV derivation of AMVP-merge mode that combines an AMVP motion vector predictor for a reference list and an inter merge candidate for the other reference list) to form a bi-predicted inter CU. Two different indices for the IBC BVP mode and the IBC merge candidate may be signaled from the encoder to the decoder, respectively, taken from IBC AMVP candidate list and IBC merge candidate list.

Method 2 may derive the two (e.g., required) BVs from the IBC merge candidate list, for example, by utilizing two different IBC merge indices. The two indices may be signaled from the encoder to the decoder. The target of the bi-predictive IBC merge mode may be, for example, IBC-regular merge, IBC merge mode with block vector difference (IBC-MBVD), and IBC geometric partitioning mode (IBC-GPM), which may be enabled for screen content (e.g., by default). Bi-predictive IBC-MBVD may be enabled in natural and screen content, while bi-predictive IBC-GPM may be enabled (e.g., only) in screen content.

The methods (e.g., method 1 and method 2) may be implemented based on one or more of the following. The methods may reuse the IBC merge candidate list construction scheme for uni-predictive IBC merge mode. The methods may use BV refinement. For example, the methods may enable the IBC with template matching. The methods may use compensation. For example, the methods may generate final IBC prediction samples with a simple (1:1) average of bi-predictive IBC samples. The methods may store the two BVs in BV storage, e.g., if/when the bi-predictive IBC is enabled. The methods may use signaling. For example, a control flag of bi-predictive IBC may be signaled at a slice level in I slice (e.g., not signaled in B and P slices). Reconstructed-Reordered IBC may be disabled, for example, if/when the bi-predictive IBC is enabled. The methods may be enabled in chroma component blocks of the single tree.

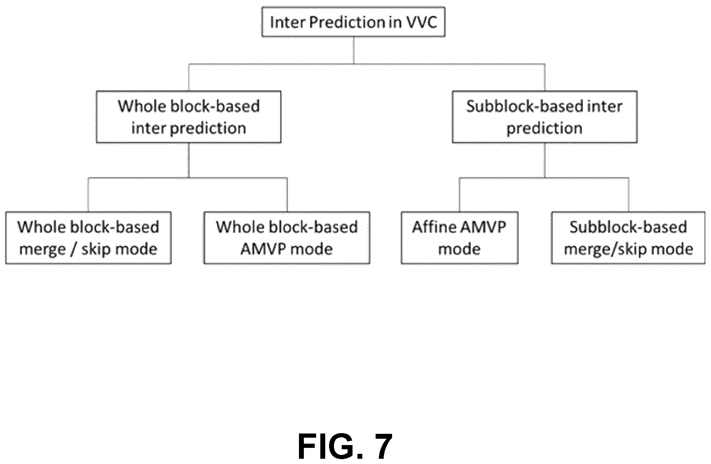

FIG. 7 illustrates example whole-block and sub-block-based motion representation categories. Features described herein may be associated with inter prediction information representation and coding. Motion data representation may be divided into categories: whole-block-based motion representation and sub-block-based motion representation, as illustrated by 7. In a category, modes for coding the motion information may be used, which include merge/skip and AMVP.

The whole-block-based motion representation may include assigning one set of motion information, made of one or two motion vectors and associated reference picture(s) to an inter block. The motion information of that block may be represented under the form of a single motion vector for the whole block.

Sub-block-based motion coding mode may divide a block into 4x4 or 8x8 luma samples subblocks and assign an individual set of motion information to a subblock.

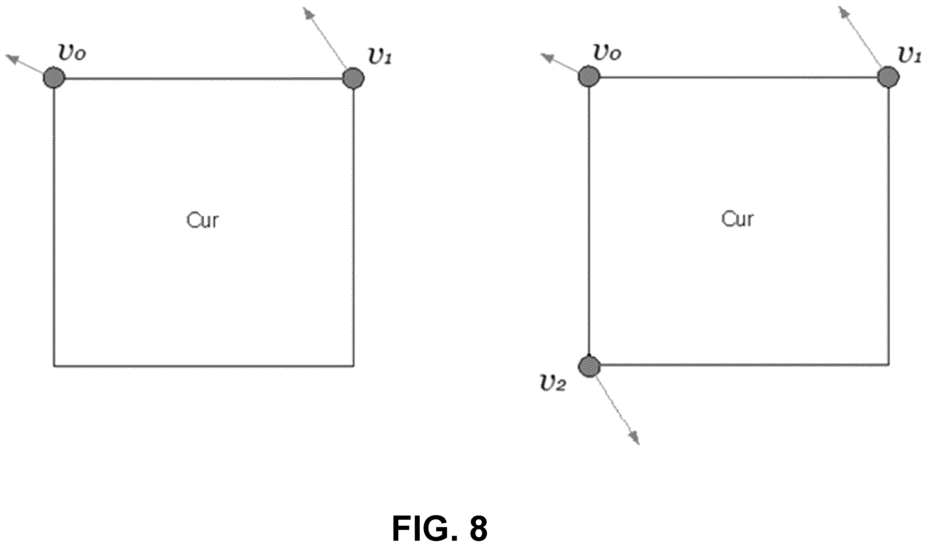

Sub-block-based motion may be represented and coded, for example, in a video coding scheme. FIG. 8 illustrates an example of control point based affine motion models (e.g., supported by a video coding scheme). On the left is shown a 4-parameter affine mode. On the right is shown a 6-parameter affine model.

Affine motion compensation may be performed. In a video coding scheme, translation motion model (e.g., only a translation motion model) may be applied for motion compensated temporal prediction (MCP). A translational motion may not capture some types of motion, such as zoom in, zoom out, rotation, perspective motions, and/or irregular motions. In a video coding scheme, a sub-block-based affine motion compensation prediction may be used at a CU level. As shown by the example in FIG. 8, the affine motion field of the block may be described by motion information of (e.g., two) control point motion vectors (e.g., 4-parameter affine motion model) or (e.g., three) control point motion vectors (e.g., 6-parameter affine motion model). As shown in FIG. 8, the vectors v_0, v_1, v_2, may be the control point motion vectors (CPMVs) associated with the block. The vectors may be used to represent the affine motion field of the considered block.

A 4-parameter affine motion model may derive a motion vector at sample location (x, y) in a block, for example, in accordance with the 4-parameter affine motion field computation shown in the following equation: $\left\{\begin{matrix}{mv}_{x} = \frac{{mv}_{1 x} - {mv}_{0 x}}{W} x + \frac{{mv}_{0 y} - {mv}_{1 y}}{W} y + {mv}_{0 x} \\ {mv}_{y} = \frac{{mv}_{1 y} - {mv}_{0 y}}{W} x + \frac{{mv}_{1 x} - {mv}_{0 x}}{W} y + {mv}_{0 y}\end{matrix}\right.$

A 6-parameter affine motion model may derive a motion vector at sample location (x, y) in a block, for example, in accordance with the 6-parameter affine motion field computation as shown in the following equation: $\left\{\begin{matrix}{mv}_{x} = \frac{{mv}_{1 x} - {mv}_{0 x}}{W} x + \frac{{mv}_{2 x} - {mv}_{0 x}}{H} y + {mv}_{0 x} \\ {mv}_{y} = \frac{{mv}_{1 y} - {mv}_{0 y}}{W} x + \frac{{mv}_{2 y} - {mv}_{0 y}}{H} y + {mv}_{0 y}\end{matrix}\right.$ where (mv0x, mv0y) may be the motion vector of the top-left corner control point, (mv1x, mv1y) may be the motion vector of the top-right corner control point, and (mv2x, mv2y) may be the motion vector of the bottom-left corner control point.

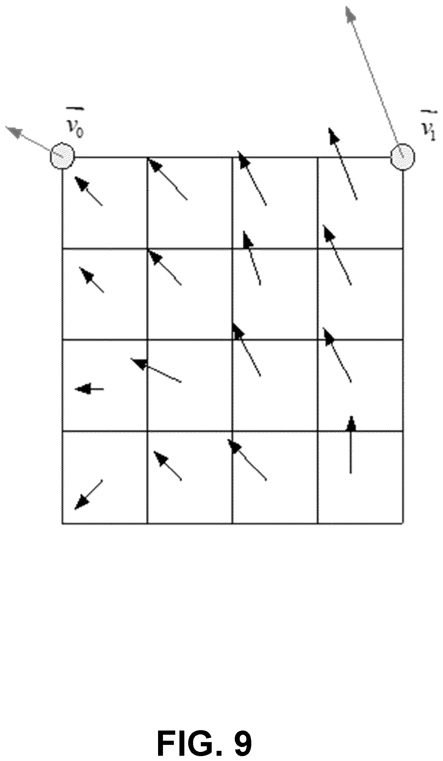

FIG. 9 illustrates an example of affine motion field representation on a 4x4 subblock basis. Affine motion compensation may be performed, for example, on a 4x4 subblock basis. A motion vector of a (e.g., each) 4×4 luma subblock may be derived, for example, by calculating the motion vector of the center sample of each subblock according to Eq. (2) or Eq. (3) (e.g., as shown by example in FIG. 9). The calculated motion vector may be rounded, for example, to 1/16 fraction accuracy. The motion compensation interpolation filters may (e.g., then) be applied to generate the prediction of a (e.g., each) subblock with the derived motion vector. The subblock size in chroma-components may (e.g., also) be, for example, 4×4. The MV of a 4×4 chroma subblock may be calculated as the average of the MVs of the top-left and bottom-right luma subblocks in the collocated 8x8 luma region.

Translational motion inter prediction may implement one or more (e.g., two main) affine inter prediction modes, such as affine AMVP mode and/or affine merge mode.

Affine merge mode may be a subblock-based motion coding mode inside the sub-block merge mode. Affine merge mode may be applied for CUs for example, based on width and/or height (e.g., if both width and height larger than or equal to eight (8)). The CPMVs of the current CU may be generated in affine merge mode based on the motion information of the spatial neighboring CUs. There may be one or more (e.g., up to five) Control Point Motion Vector Predictors (CPMVP) candidates. An index may be signaled to indicate the candidate to be used for the current CU. One or more of the following three types of CPVM candidate may be used to form an affine merge candidate list: inherited affine merge candidates extrapolated from the CPMVs of the neighbor CUs; constructed affine merge candidates' CPMVPs that may be derived using the translational MVs of the neighbor CUs; and/or zero MVs.

There may be a maximum number of (e.g., two) inherited affine candidates, which may be derived from the affine motion model of the neighboring blocks, e.g., one from left neighboring CUs and one from above neighboring CUs.

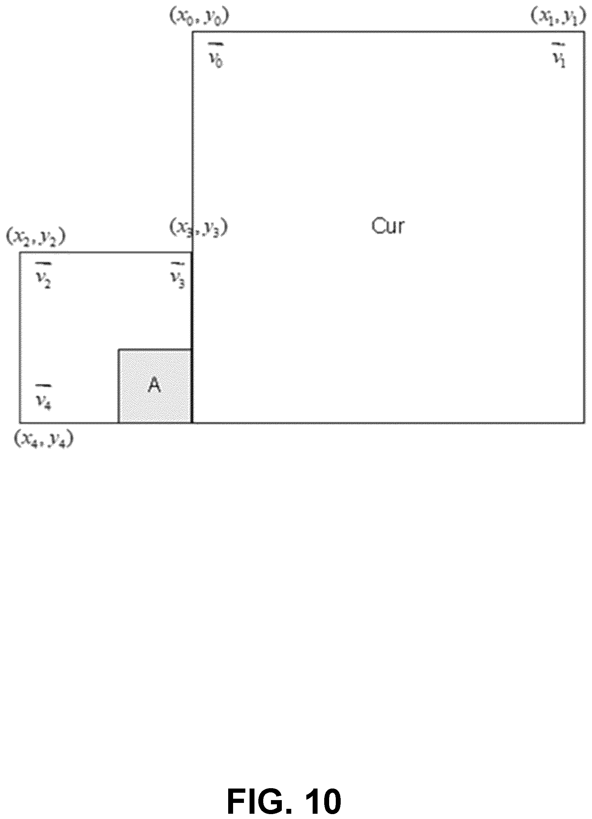

FIG. 10 illustrates an example of control point motion vector inheritance. As shown in FIG. 10, the motion vectors v₂ , v₃ and v₄ of the top left corner, above right corner and left bottom corner of the CU that include the block A may be attained, for example, if the neighbor left bottom block A is coded in affine mode. The two CPMVs of the current CU may be calculated according to v₂, and v₃, for example, if/when block A is coded with a 4-parameter affine model. The three CPMVs of the current CU may be calculated according to v₂, v₃, and v₄, for example, if block A is coded with a 6-parameter affine model.

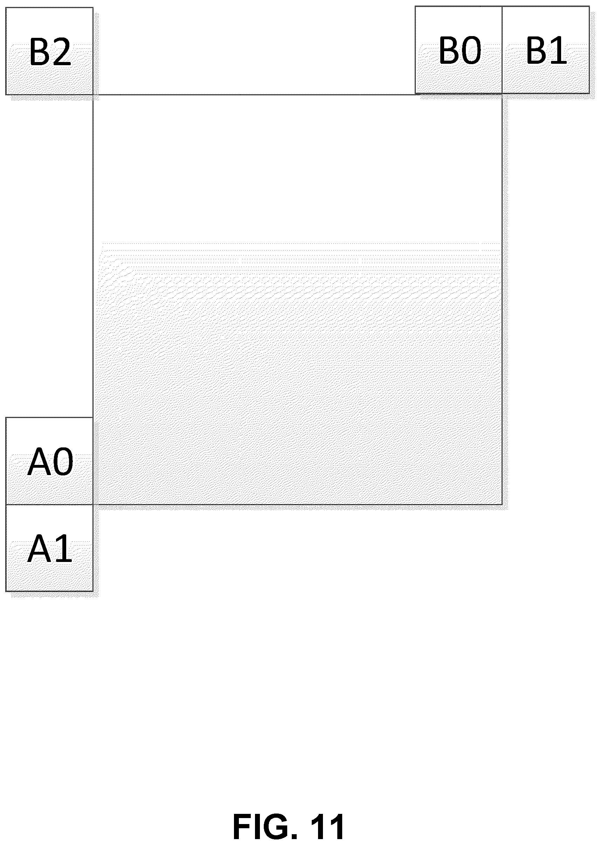

Candidate blocks are shown by example in FIG. 11. FIG. 11 illustrates an example of locations of inherited affine motion predictors. The scan order may be A0->A1, for example, for the left predictor. The scan order may be B0->B1->B2, for example, for the above predictor. The first inherited candidate from a (e.g., each) side (e.g., only the first inherited candidate from each side) may be selected. Control point motion vectors for a neighboring affine CU may be used to derive the CPMVP candidate in the affine merge list of the current CU, for example, if/when the neighboring affine CU is identified.

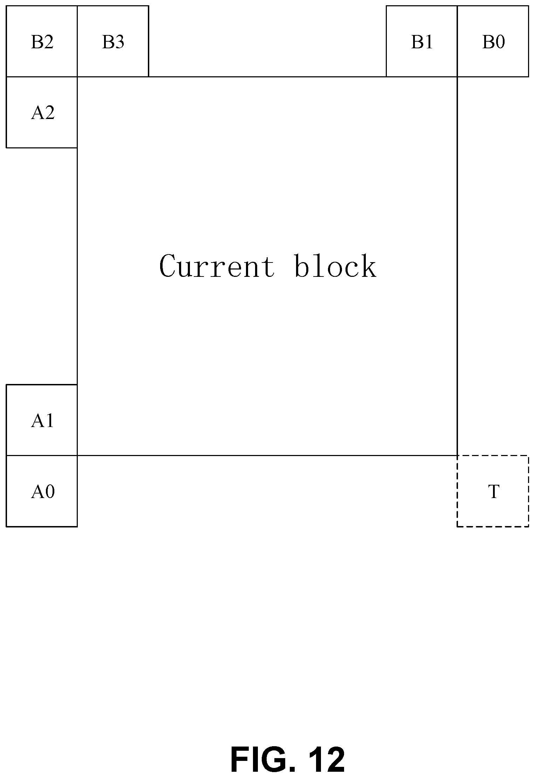

FIG. 12 illustrates an example of locations of a candidate's position for constructed affine merge mode. A constructed affine candidate may be a candidate constructed by combining the neighbor translational motion information of each control point. The motion information for the control points may be derived from (e.g., specified) spatial neighbors and a temporal neighbor, e.g., as shown by example in FIG. 12. CPMVk (k=1, 2, 3, 4) may represent the k-th control point. For CPMV1, the B2->B3->A2 blocks may be checked. The MV of the first available block may be used. For CPMV2, the B1->B0 blocks may be checked. For CPMV3, the A1->A0 blocks may be checked. TMVP may be used as CPMV4, for example, if it is available.

Affine merge candidates may be constructed based on the motion information, for example, after MVs of four control points are obtained. One or more of the following combinations of control point MVs may be used to generate a constructed affine merge candidate (e.g., in the following order): {CPMV1, CPMV2, CPMV3}, {CPMV1, CPMV2, CPMV4}, {CPMV1, CPMV3, CPMV4}, {CPMV2, CPMV3, CPMV4}, { CPMV1, CPMV2}, { CPMV1, CPMV3}.

For example, control point motion vectors {CPMV1, CPMV2, CPMV3} may be used. Control point motion vectors {CPMV1, CPMV2, CPMV3} may be used to generate an affine motion field for the CU.

The combination of three (3) CPMVs may construct a 6-parameter affine merge candidate. The combination of two (2) CPMVs may construct a 4-parameter affine merge candidate. The related combination of control point MVs may be discarded, for example, if the reference indices of control points are different, which may avoid a motion scaling process in case CPMVs point to different reference pictures.

Zero MVs may be inserted to the end of the list, for example, if the list is still not full after inherited affine merge candidates and constructed affine merge candidate are considered for being appended to the affine merge candidate list.

Affine AMVP mode may be applied for CUs based on width and/or height (e.g., with both width and height larger than or equal to 16). An affine flag (e.g., at CU level) may be signaled in the bitstream to indicate the use of affine AMVP mode. Another flag may signal if a 4-parameter affine or a 6-parameter affine model is used. The difference of the CPMVs of a current CU and their predictors CPMVPs may be coded, e.g., in affine AMVP mode.

The CPMVPs used to predict the CPMV of a CU may be taken from an affine AMVP candidate list, which may be made of two (2) elements. The affine AMVP candidate list may be constructed, for example, using one or more of the following types of CPVM candidate (e.g., in the following order): inherited affine AMVP candidates extrapolated from the CPMVs of the neighbor CUs; constructed affine AMVP candidates CPMVPs that may be derived using the translational MVs of the neighbor CUs; translational MVs from neighboring CUs; and/or zero MVs.

Term checking may be used. Checking a potential candidate may include checking that a valid affine AMVP or affine merge candidate to predict the current CU's affine CPMVs is available and/or is valid. An available and valid candidate may be added to the candidate list under construction.

The checking order of inherited affine AMVP candidates may be the same as or similar to the checking order of inherited affine merge candidates. A difference (e.g., the only difference) may be that (e.g., only) the affine CU that has the same reference picture as in the current block may be considered for an AVMP candidate. A pruning process may not be applied, for example, if/when inserting an inherited affine motion predictor into the candidate list.

A constructed affine AMVP candidate may be derived from (e.g., specified) spatial neighbors, e.g., as shown by example in FIG. 12. The checking order used may, for example, be the same as a checking order in affine merge candidate construction. The reference picture index of the neighboring block may (e.g., also) be checked. The block that may be used may be the first block in the checking order that is inter coded and has the same reference picture as current CUs.

MVs *mv*₀ and *mv*₁ may be added as one candidate in the affine AMVP list, for example, if/when the current CU is coded with 4-parameter affine mode, and *mv*₀ and *mv*₁ are both available. Three CPMVs may be added as one candidate in the affine AMVP list, for example, if/when the current CU is coded with 6-parameter affine mode, and the three CPMVs are available. A constructed AMVP candidate may be set as unavailable, for example, if otherwise.

MVs *mv*₀ , *mv*₁ and *mv*₂ may be added, e.g., in order, as translational MVs to predict (e.g., all) control point MVs of the current CU, e.g., if/when available, for example, if the affine AMVP list of candidates is still less than two (2) after valid inherited affine AMVP candidates and constructed AMVP candidate are inserted. Z zero MVs may (e.g., then) be used to fill the affine AMVP list if it is still not full.

Prediction refinement with optical flow (PROF) may be performed in the affine mode. Subblock-based affine motion compensation may save memory access bandwidth and/or reduce computation complexity (e.g., compared to pixel-based motion compensation and/or at the cost of prediction accuracy penalty). PROF may be used to refine a subblock-based affine motion compensated prediction. The use of PROF may achieve a finer granularity of motion compensation without increasing the memory access bandwidth for motion compensation. For example, after the subblock-based affine motion compensation is performed, luma prediction sample may be refined by adding a difference that may be derived using an optical flow equation.

The PROF may be performed as follows. At a first step, subblock-based affine motion compensation may be performed to generate a subblock prediction I(i,j). At a second step, the spatial gradients gx(i,j) and gy(i,j) of the subblock prediction may be calculated at a (e.g., each) sample location, for example, using a 3-tap filter [-1, 0, 1]. The gradient calculation may be the same as that performed in a bi-directional optical flow (BDOF) mode, for example, as illustrated by the following equations: ${g}_{x} \left(i, j\right) = \left(I\left(i+1,j\right)≫shift1\right) - \left(I\left(i-1,j\right)≫shift1\right)$ ${g}_{y} \left(i, j\right) = \left(I\left(i,j+1\right)≫shift1\right) - \left(I\left(i,j-1\right)≫shift1\right)$ wherein shift1 may be used to control the gradient's precision. The subblock (e.g., a 4x4 sub-block) prediction may be extended by a sample on one or more sides (e.g., on each side) for the gradient calculation. Those extended samples on the extended borders may be copied from the nearest integer pixel position in the reference picture, for example, to avoid additional memory bandwidth and/or additional interpolation computation.

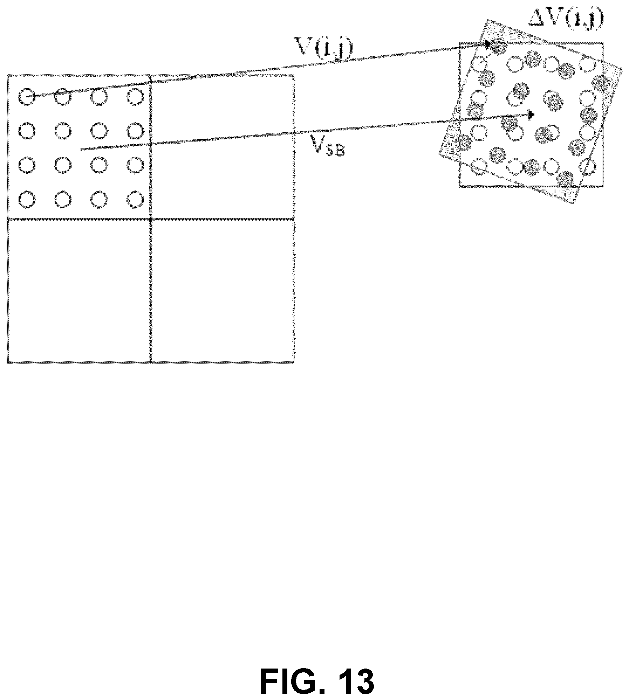

FIG. 13 shows a subblock MV VSB and pixel **Δ*v***(***i,j***) (indicated by the small arrow on the right side of FIG. 13) At a third step, luma prediction refinement may be determined by the following optical flow equation: $Δ I \left(i, j\right) = {g}_{x} \left(i, j\right) ∗ Δ {v}_{x} \left(i, j\right) + {g}_{y} \left(i, j\right) ∗ Δ {v}_{y} \left(i, j\right)$ where Δv(i,j) may represent the difference between a sample MV computed for sample location (i,j), denoted by v(i,j), and the subblock MV (e.g., VSB shown in the figure) of the subblock to which sample (i,j) belongs, as shown in FIG. 13. Δv(i,j) (e.g., represented by the short arrow in the figure) may be quantized in the unit of 1/32 luma sample precision.

Since the affine model parameters and/or the sample location relative to the subblock center may not be changed from subblock to subblock, Δ*v*(*i, j*) may be calculated for a first subblock and reused for other subblocks in the same CU. Let *dx*(*i, j*) and *dy*(*i, j*) be the horizontal and vertical offsets from the sample location (*i, j*) to the center of the subblock (*x_{SB}, y_{SB}*)*, Δᵥ*(*x, y)* may be derived by the following equations: $\left\{\begin{matrix}dx \left(i, j\right) = i - {x}_{SB} \\ dy \left(i, j\right) = j - {y}_{SB}\end{matrix}\right.$ $\left\{\begin{matrix}Δ {v}_{x} \left(i, j\right) = C ∗ dx \left(i, j\right) + D ∗ dy \left(i, j\right) \\ Δ {v}_{y} \left(i, j\right) = E ∗ dx \left(i, j\right) + F ∗ dy \left(i, j\right)\end{matrix}\right.$ wherein C, D, E, and F may be defined as shown below.

The center of the subblock (*x_{SB}, y_{SB}*) may be calculated as ((WSB - 1)/2, (HSB - 1)/2) (e.g., to keep the accuracy of the calculation), where WSB and HSB may represent the subblock width and height, respectively. For a 4-parameter affine model, the following may be true: $\left\{\begin{matrix}C = F = \frac{{v}_{1 x} - {v}_{0 x}}{w} \\ E = - D = \frac{{v}_{1 y} - {v}_{0 y}}{w}\end{matrix}\right.$

For a 6-parameter affine model, the following may be true: $\left\{\begin{matrix}C = \frac{{v}_{1 x} - {v}_{0 x}}{w} \\ D = \frac{{v}_{2 x} - {v}_{0 x}}{h} \\ E = \frac{{v}_{1 y} - {v}_{0 y}}{w} \\ F = \frac{{v}_{2 y} - {v}_{0 y}}{h}\end{matrix}\right.$ where (*v*₀*ₓ, v*_{0*y*})*,* (*v*₁ₓ, *v*_{1y})*,* (*v*₂*ₓ, v*_{2*y*}) may represent the top-left, top-right and bottom-left control point motion vectors, and w and h may represent the width and height of the CU.

At a fourth step, the luma prediction refinement Δ*I* (*i, j*) may be added to the subblock prediction *I*(*i, j*)*.* The final prediction I' may be generated using the following equation: $I ′ \left(i, j\right) = I \left(i, j\right) + Δ I \left(i, j\right)$

PROF may not be applied in some cases to an affine coded CU. For example, PROF may not be applied if multiple (e.g., all) control point MVs are the same, which may indicate that the CU only has translational motion. As another example, PROF may not be applied if the affine motion parameters are greater than a specified limit (e.g., because subblock-based affine MC may be degraded to CU-based MC to avoid using a large memory access bandwidth).

A fast encoding method may be applied to reduce the encoding complexity of affine motion estimation with PROF. PROF may not be applied at an affine motion estimation stage in some cases. For example, if a CU is not the root block and its parent block does not select the affine mode as its best mode, PROF may not be applied since the possibility for a current CU to select the affine mode as best mode is low. As another example, if the magnitude of one or more (e.g., all) of four affine parameters (C, D, E, F) are smaller than a predefined threshold and the current picture is not a low delay picture, PROF may not be applied (e.g., because the improvement introduced by PROF may be small for this case). In this way, the affine motion estimation with PROF may be accelerated.

Sub-block-base motion vector prediction may be based on directional MV spatial propagation. Candidate modes for sub-block based motion vector field derivation in sub-block-based merge mode may be described herein.

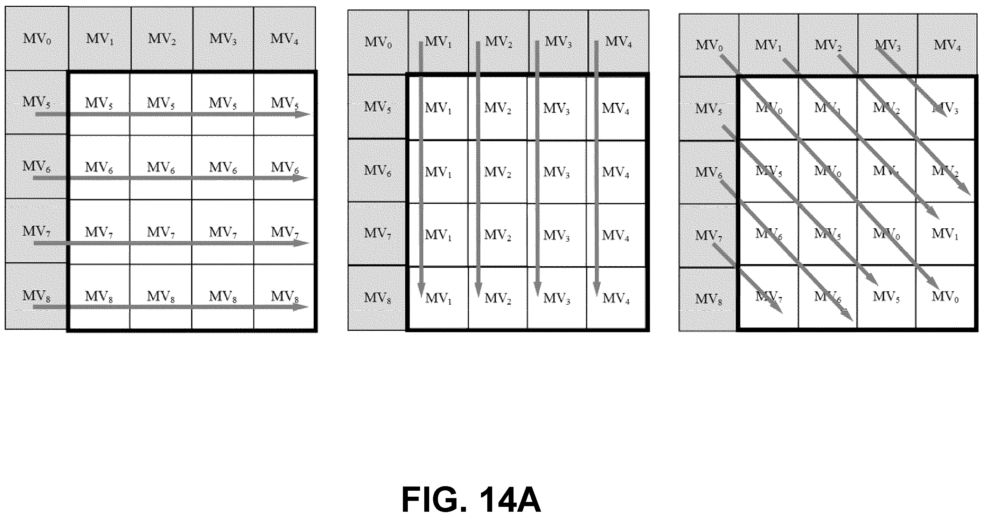

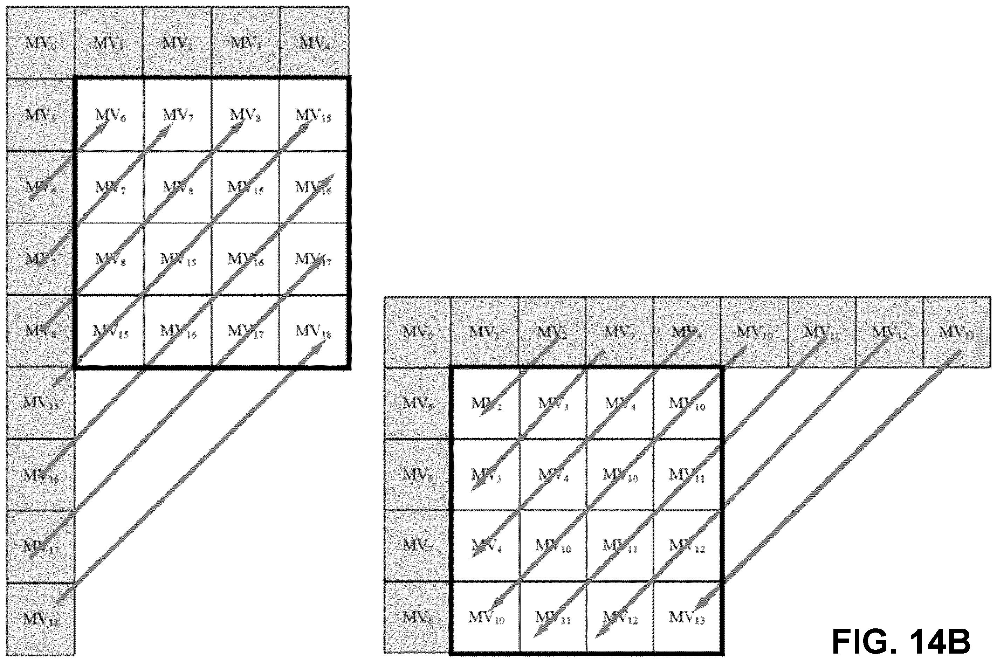

FIGS. 14A and 14B illustrate examples of sub-block based spatial motion vector prediction (sbSMVP) candidate types in which MVs of subblocks may be inherited directionally. The candidate modes for sub-block-based motion vector field derivation in sub-block-based merge mode may include the following. The subblock motion field of the current CU may be inherited based on the motion of the spatial neighbor blocks. Examples of sbSMVP candidate types, in which MVs of subblocks may be inherited directionally, are shown in FIGS. 14A and 14B.

The method of sbSMVP may provide additional candidates in the subblock merge candidate list. Up to 5 SSMVP candidates may be added between sbTMVP candidates and affine merge candidates. If a certain SSMVP candidate is selected, the motion data, such as motion vectors, reference indices, and prediction direction, of the corresponding neighboring subblocks may be copied to the current subblocks along a predefined direction, as depicted by the arrows in FIGS. 14A and 14B.

The (e.g., all) subblock motion candidates, including sbTMVP candidates, sbSMVP candidates, and affine candidates, may be reordered, for example, based on template matching cost.

The coding efficiency of video coding may be increased, for example, by improving the compression efficiency gain brought by SSMVP coding.

Sub-block based spatial motion vector prediction may be applied to coding modes other than sub-block-based merge mode.

The extension of the sub-block-based spatial MV prediction may be extended to block vectors.

For a CU coded in IBC merge mode, a sub-block-based merge candidate may be constructed based on spatial neighboring block vectors, similar to SSMVP, for example.

The so-constructed spatial sub-block-based block vector prediction (SSBVP ) may be added to the IBC merge candidate list of considered CU.

A separate merge candidate list for IBC, including sub-block-based block vector field predictor candidates, may be constructed and include SSBVP merge candidates.

When 4x4 blocks around the current CU includes block vectors and sub-blocks include motion vectors, a spatial sub-block-based propagation of MVs and BVs may be applied. This may lead to an IBC merge candidate that includes motion and block vectors.

The above mixed MV/BV merge candidates may be employed as a sub-block merge candidate of a CU coded in inter mode (as opposed to IBC mode).

If spatial neighboring of the current CU includes sub-blocks with an associated intra prediction mode and sub-blocks with an associated motion or block vector, the MVs and/or BVs may be considered to construct a SSMVP or SSBVP merge candidate for the current CU. MVs or BVs for intra spatial neighboring block may be derived by interpolating available MV or BV in the spatial neighborhood of a current CU.

In examples for extending SSMVP mode, the SSMVP may be used to derive a sub-block-based motion field predictor of a inter CU coded in sub-block-based AMVP mode. The coded motion vector difference vector may be applied to a sub-block of the predicted MV field. The SSBVP mode may be used to derive sub-block-based BV prediction candidates for a CU coded in IBC AMVP mode. The coded motion vector difference vector may be applied to a sub-block of the predicted BV field.

The sub-block-based block vector representation may be used for chroma blocks in single tree and dual tree. In a single tree, the BV field of the IBC CU in chroma component may be the same as that of the luma part that is rescaled with respect to the chroma sampling ratio. In dual tree, the chromaDBV coding mode may extended to the derivation of a BV field rather than a single BV as in prior art. For example, if the considered IBC CU employs a SSBVP candidate with a certain direction for BV propagation from spatial neighborhood, the same direction may be used in the chroma part to derive a BV field for the considered chroma block.

Features described herein may include sub-block based spatial block vector prediction (SSBVP) IBC mode. The sub-block-based spatial propagation of motion vector of the SSMVP tool may be extended to IBC merge coding mode.

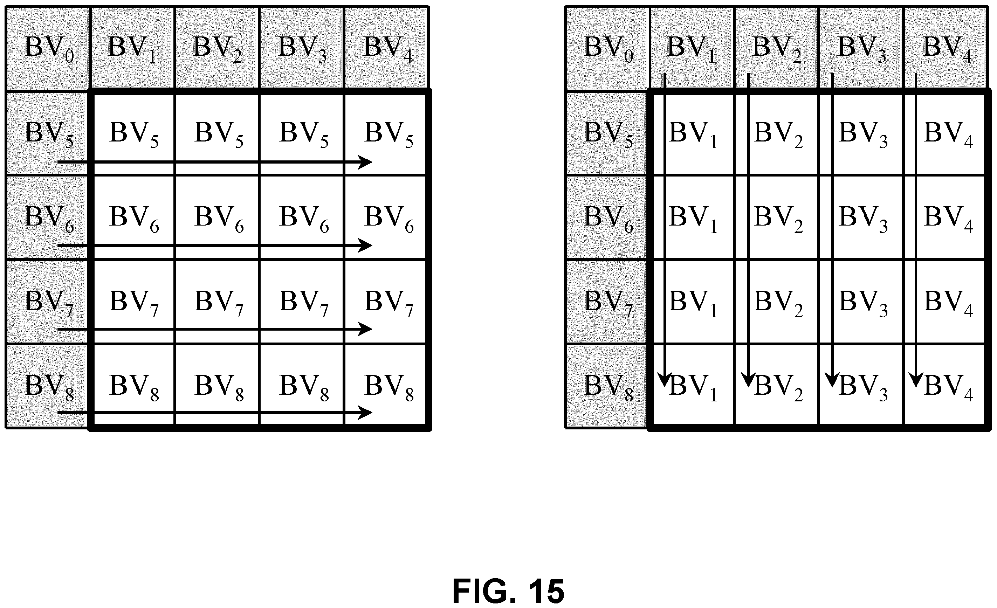

FIG. 15 illustrates an example for sub-block based spatial propagation of block vector information. In IBC merge mode, the construction of the IBC merge candidate list, as described herein, may be enriched in order to include updated sub-block-based spatial block vector prediction (SSBVP) candidates, in addition to IBC merge candidates. This may take the form of the directional spatial propagation of block vector information shown FIG. 15. Examples of directional spatial BV propagation are shown in FIG. 12, and angular directions as shown on FIG. 14 may be supported.

For example, the updated sub-block-based IBC merge candidates may be inserted in the IBC merge list, after the regular spatial merge candidates.

Propagate block vectors may undergo template-matching based BV refinement, as is done for other IBC merge candidates. To do so, the TM-based BV refinement may apply on sub-block basis, in order to refine a propagated block vector separately from other ones.

The newly introduced SSBVP candidate may be sorted in the merge list with IBC candidate on an IBC template matching cost basis. The template matching cost of a SSBVP candidate may be computed along the top and left boundaries of the considered CU. The template matching cost may be computed considering the top-only part template of sub-block along the top boundary of the CU, and left-only part template of sub-block located along the left boundary of considered CU.

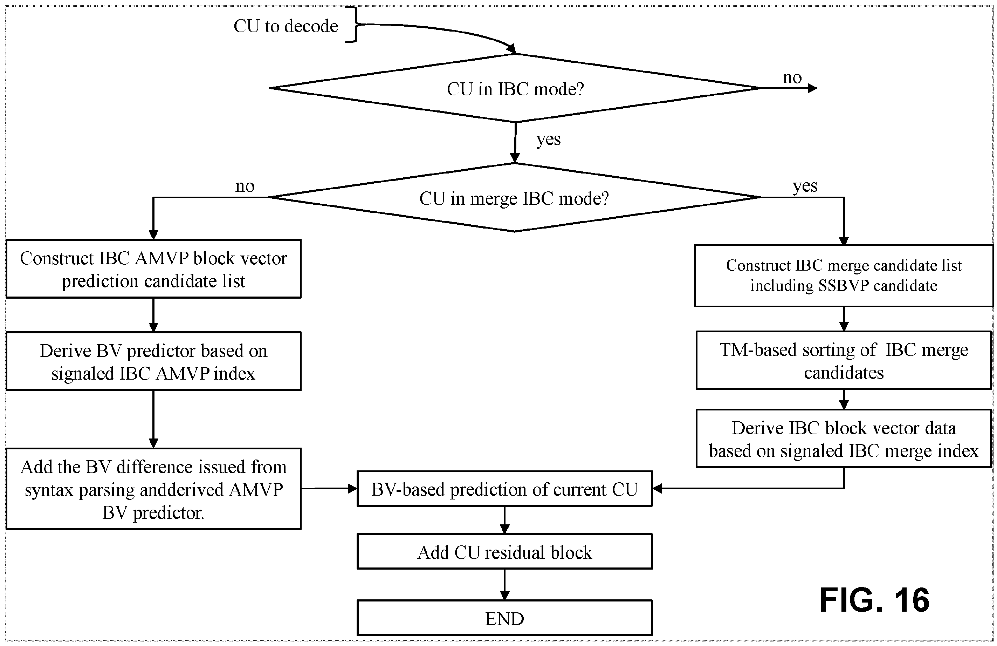

FIG. 16 shows an example CU decoding process, for example, for the case of a CU in IBC mode. The step of the CU decoding process modified by examples described herein is associated with the IBC merge list construction.

The IBC merge list may include the following candidates before the TM-based reordering happens: spatial left, spatial above, spatial above right, spatial left bottom, spatial above left, non adjacent candidates, temporal BV candidates, HMVP IBC candidates, ARBVP candidates, pairwise candidates, and/or zero-BV candidates.

SSBVP IBC merge candidates may be inserted in the merge list, for example, after spatial candidates. This may lead to the following series of IBC merge candidates before TM-based reordering: spatial left, spatial above, spatial above right, spatial left bottom, spatial above left, SSBVP candidates, non-adjacent candidates, temporal BV candidates, HMVP IBC candidates, ARBVP candidates, pairwise candidates, and/or zero-BV candidates.

In examples, a separate merge candidate list for IBC, including sub-block-based block vector field predictor candidates, may be constructed and may include SSBVP merge candidates. For example, two types of merge mode may be used for IBC. A first type may include whole-block-based IBC prediction mode, and a second type may include sub-block-based IBC prediction mode. The separate sub-block-based BV prediction candidate list may include SSBVP candidates, and, for example, affine IBC candidates.

Examples described herein may include sub-block-based mixed MV/BV directional spatial propagation.

The SSBVP mechanism may be used in combination with an SSMVP mechanism according to a neighborhood of a current coding unit.

SSMVP motion data derivation may be extended to examples cases where neighboring sub-blocks of current block do not have any motion vector. For example, some neighboring CUs of a current CU may be coded in inter mode and have motion data, and neighboring CUs may be in IBC coding mode and not have motion data.

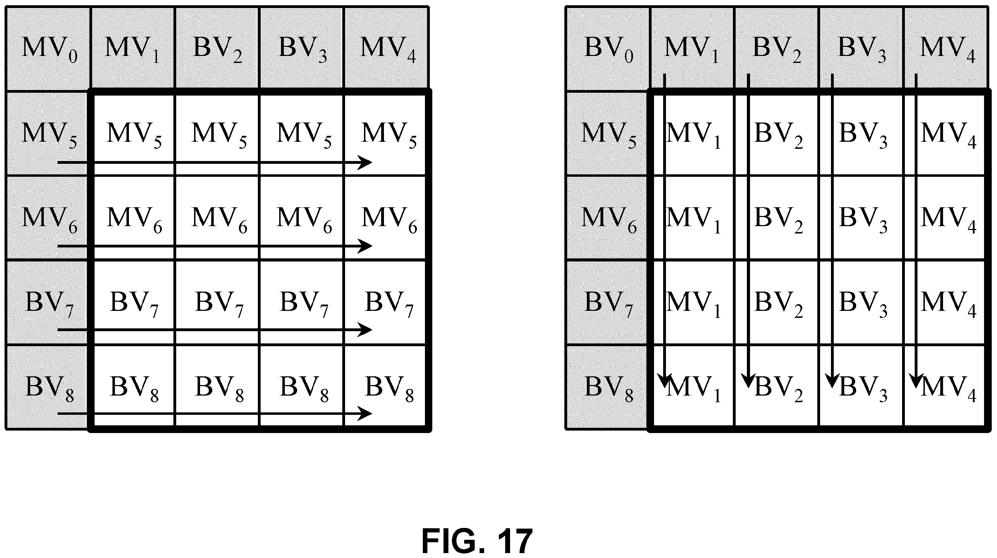

FIG. 17 shows an example of a mixed MV/BV spatial directional propagation to derive the prediction data of a current CU. Both motion vector and block vector information may be propagated along a selected angular direction to derive prediction data for the current CU. This may take the form of the spatial directional propagation, as shown in FIG. 17. The so-derived MV/BV field may be used as a merge candidate in the sub-block-based inter merge mode or in the proposed sub-block-based IBC merge mode.

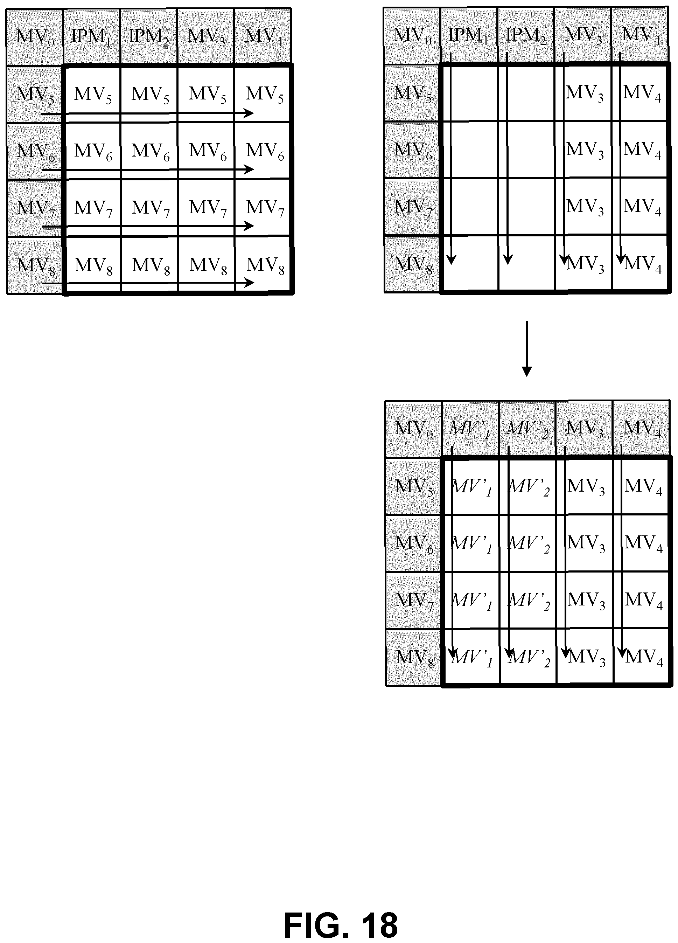

FIG. 18 shows an example of a mixed MV/BV spatial directional propagation used to derive the prediction data of a current CU. Incomplete MV or BV information in sub-blocks surrounding the current CU may be processed. In examples, the SSMVP mode and the updated SSBVP mode may be extended to handle cases where motion of block vector information is not available in the entire top and left neighborhood of current CU.

If a CU on top or on the left of the current CU is coded in intra mode and not in inter or IBC mode, no MV or BV information may be available in the corresponding sub-block in the spatial neighborhood of current CU. That may be the case for the two sub-blocks that have intra prediction modes IPM1 and IPM2. In that case, a method may be used to derive the motion data (e.g., if considered an inter CU) of a sub-block internal to the current CU for which MV information cannot be spatially derived using the angular direction used for current CU.

In FIG. 18, if the angular direction is horizontal, all neighboring MV data may be available to predict the MV of current CU. In examples including a vertical direction, the MV of a sub-block may (or may not) be derived in the current CU. A method may be used to produce propagated MV data {MVi,j, i=1,2, j=1,..,4} in a current CU.

According to examples, interpolation or padding may be applied to motion information available in the spatial neighborhood of current CU to generate missing motion information in that neighborhood.

Missing motion information ${MV}_{1}^{′}$ and ${MV}_{2}^{′}$ on FIG. 18 may be computed by interpolating *MV*₀ and *MV*₁*.* Interpolation may include a weighted averaging of motion vectors, including preliminary rescaling of MVs to align them in terms of a reference picture index.

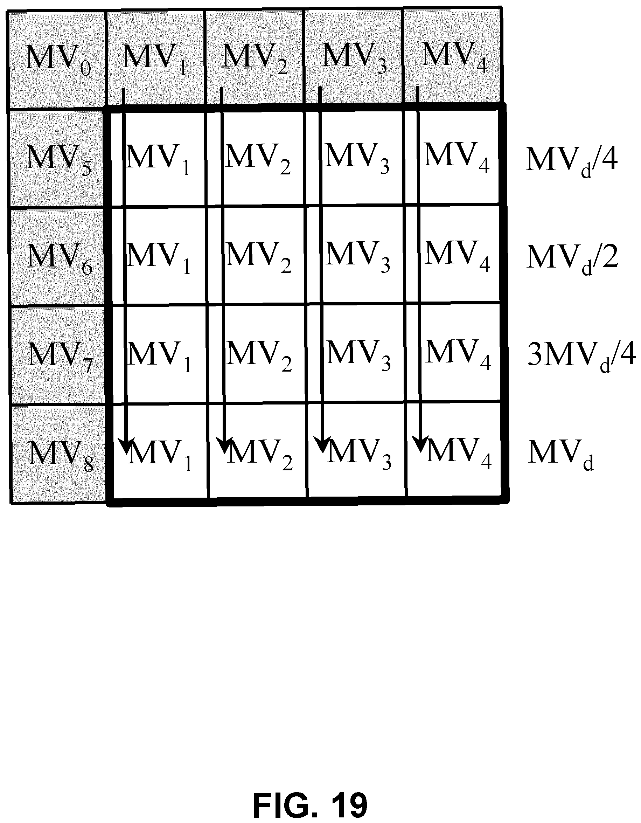

FIG. 19 includes a position dependent MV difference assignment according to the angular direction used for spatial MV prediction. Features described herein may include an extension of SSMVP and/or SSBVP to AMVP mode.

In examples for extending SSMVP mode, the SSMVP may be used to derive a sub-block-based motion field predictor of a inter CU coded in sub-block-based AMVP mode. In examples, the coded motion vector difference vector may be applied to a sub-block of the predicted MV field.

SSMVP may be combined with Merge with Motion Vector Difference (MMVD), where an MV offset may be applied to a sub-block, when the SSMVP candidate is used with a motion vector difference.

The MVD may be applied to the sub-blocks farthest from the neighborhood sub-block that serve as references for MV propagation. A sub-block along a propagation line may be assigned a MV difference which is sub-block position dependent and interpolated between 0 and the signaled MVD, according to the sub-block position inside the CU. An example is given on FIG. 19. A video coding device may, for example, obtain from video data, a motion-vector difference (MVD) associated with the current video block (e.g., separately and after an MV merge candidate is selected from the merge candidate list).

In examples, the SSBVP mode may be used to derive sub-block-based BV prediction candidates for a CU coded in IBC AMVP mode.

In that case, the coded motion vector difference vector may be applied to a sub-block of the predicted BV field, or may be position-dependent assigned, similarly to the idea of FIG. 19.

SSBVP may be combined with Merge with Motion Vector Difference (MMVD), where a common MV offset may be applied to a sub-block, when the SSBVP candidate is used with a motion vector difference.

In examples, the sub-block-based block vector representation may be used for chroma blocks, both in the base of single tree and dual tree. In examples including a single tree, the BV field of the IBC CU in chroma component may be the same as that of the luma part, potentially rescaled with respect to the chroma sampling ratio. In dual tree, the chroma DBV coding mode may extended to the derivation of a BV field. For example, if the considered IBC CU employs a SSBVP candidate with a certain direction for BV propagation from a spatial neighborhood, the same direction may be used in the chroma part to derive a BV field for considered chroma block.

In example, the IntraTMP coding mode may be extended by supported SSBVP block vector candidates derived from BVs of neighboring blocks. The SSBVP candidate may be put in the template matching cost-based competition with other IntraTMP BV candidates.

Sub-block sizes may be supported in the SSMVP mode or new proposed SSBVP mode. For example, down to 1x1 sub-block size may be supported in the SSMVP or SSBVP modes. The sub-block size may be selected at CU level and signaled in the coded video bit-stream.

In examples, the usage proposed SSBVP block vector representation mode may be controlled at a high level, for instance at sequence level, by means of a dedicated sequence parameter set (SPS) signaled flag.

In examples, the usage proposed SSBVP block vector representation mode may be controlled at a high level, for example, at picture level, by means of a dedicated picture header signaled flag.

In examples, the usage proposed SSBVP block vector representation mode may be controlled at a high level, for example at slice level, by means of a dedicated slice header signaled flag.

In examples, the usage SSBVP block vector representation mode may be controlled at a high level, for example at sub-picture, tile or tile group level.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, comprising:
a processor configured to:
obtain a block vector (BV) associated with a first subblock of a video block, wherein the video block is adjacent to a current video block;
obtain a subblock merge candidate based on the BV;
generate a merge candidate list comprising the subblock merge candidate;
predict a subblock of the current video block based on the merge candidate list; and
decode the current video block based on the predicted subblock.

2. A device for video encoding, comprising:
a processor configured to:
obtain a block vector (BV) associated with a first subblock of a video block, wherein the video block is adjacent to a current video block;
obtain a subblock merge candidate based on the BV;
generate a merge candidate list comprising the subblock merge candidate;
predict a subblock of the current video block based on the merge candidate list; and
encode the current video block based on the predicted subblock.

3. The device of claim 1 or claim 2, wherein the processor is further configured to:
determine that an intra block copy (IBC) merge mode is enabled for the current video block;
determine a propagation direction associated with the BV;
obtain a plurality of subblocks of the current video block based on the propagation direction;
generate an IBC merge candidate list comprising the subblock merge candidate; and
predict a subblock of the plurality of subblocks based on the IBC merge candidate list.

4. The device of claim 3, wherein each subblock of the plurality of subblocks is predicted using an IBC merge candidate list comprising the subblock merge candidate, and wherein the plurality of subblocks of the current video block comprises the subblock of the current video block.

5. The device of claim 1 or claim 2, wherein the merge candidate list is an IBC merge candidate list associated with the current video block or a merge candidate list that is separate from the IBC merge candidate list.

6. The device of any one of claims 1-5, wherein the processor is further configured to:
obtain a motion vector (MV) associated with a second subblock of the video block that is adjacent to the current video block, wherein the subblock merge candidate is obtained further based on the MV associated with the second subblock of the video block.

7. The device of claim 6, wherein the subblock merge candidate is a subblock-based IBC merge candidate.

8. The device of any one of claims 1-5, wherein the subblock merge candidate is a first BV merge candidate, and the processor is further configured to:
obtain a motion vector (MV) associated with a second subblock of the video block that is adjacent to the current video block; and
obtain a MV merge candidate based on the MV associated with the second subblock of the video block, wherein the merge candidate list comprises the MV merge candidate and the first BV merge candidate.

9. The device of claim 8, wherein the processor is further configured to:
determine that a third subblock of the video block is predicted using an intra-prediction;
obtain a BV associated with the third subblock of the video block based at least on the BV associated with first subblock of the video block; and
obtain a second BV merge candidate based on the BV associated with the third subblock,
wherein the merge candidate list further comprises the second BV merge candidate.

10. The device of claim 9, wherein the processor is further configured to obtain the BV associated with the third subblock of the video block through interpolation or a padding process.

11. The device of any one of claims 1-10, wherein the subblock merge candidate is a BV merge candidate, and the processor is further configured to:
obtain a motion vector (MV) associated with a second subblock of the video block that is adjacent to the current video block;
obtain a MV merge candidate based on the MV associated with the second subblock of the video block, wherein the merge candidate list comprises the MV merge candidate and the BV merge candidate;
select the MV merge candidate from the merge candidate list based on a template cost associated with the MV merge candidate;
determine that advanced motion vector prediction (AMVP) is enabled for the current video block;
obtain a motion vector difference (MVD) associated with the current video block; and
predict the subblock of the current video block based on the selected MV merge candidate and the MVD.

12. A method for video decoding, comprising:
obtaining a block vector (BV) associated with a first subblock of a video block, wherein the video block is adjacent to a current video block;
obtaining a subblock merge candidate based on the BV;
generating a merge candidate list comprising the subblock merge candidate;
predicting a subblock of the current video block based on the merge candidate list; and
decoding the current video block based on the predicted subblock.

13. A method for video encoding, comprising:
obtaining a block vector (BV) associated with a first subblock of a video block, wherein the video block is adjacent to a current video block;
obtaining a subblock merge candidate based on the BV;
generating a merge candidate list comprising the subblock merge candidate;
predicting a subblock of the current video block based on the merge candidate list; and
encoding the current video block based on the predicted subblock.

14. The method of claim 12 or claim 13, further comprising:
determining that an intra block copy (IBC) merge mode is enabled for the current video block;
determining a propagation direction associated with the BV;
obtaining a plurality of subblocks of the current video block based on the propagation direction;
generating an IBC merge candidate list comprising the subblock merge candidate; and
predicting a subblock of the plurality of subblocks based on the IBC merge candidate list.

15. The method of any one of claims 12-14, wherein the subblock merge candidate is a first BV merge candidate, and the method further comprises:
obtaining a motion vector (MV) associated with a second subblock of the video block that is adjacent to the current video block;
obtaining a MV merge candidate based on the MV associated with the second subblock of the video block, wherein the merge candidate list comprises the MV merge candidate and the first BV merge candidate;
determining that a third subblock of the video block is predicted using an intra-prediction;
obtaining a BV associated with the third subblock of the video block based at least on the BV associated with the first subblock of the video block; and
obtaining a second BV merge candidate based on the BV associated with the third subblock, wherein the merge candidate list further comprises the second BV merge candidate.
